Europäisches Patentamt

European Patent Office

Office européen des brevets

(19)

(11) EP 0 945 970 A2

## (12) EUROPÄISCHE PATENTANMELDUNG

(43) Veröffentlichungstag:
29.09.1999 Patentblatt 1999/39

(51) Int Cl.⁶: **H02M 7/48**

(21) Anmeldenummer: 99105990.8

(22) Anmeldetag: 25.03.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 26.03.1998 DE 19813362

(71) Anmelder: ABB Daimler-Benz Transportation (Technology) GmbH
13627 Berlin (DE)

(72) Erfinder:
• Krafka, Peter Dr.-Ing.
69198 Schriesheim (DE)

• Rampe, Michael Dipl.-Ing.
68535 Edingen-Neckarshausen (DE)
• Becker, Robert Dipl.-Ing.
76684 Östringen (DE)
• Jänecke, Michael Prof., Dr.-Ing.
49191 Belm (DE)

(74) Vertreter: Luderschmidt, Schüler & Partner GbR Patentanwälte,
John-F.-Kennedy-Strasse 4
65189 Wiesbaden (DE)

(54) **Verfahren zur Bestimmung der Ausgangsspannung eines Zweitpunkt-Wechselrichters**

(57) Es wird ein Verfahren zur Bestimmung der Ausgangsspannung eines über einen Gleichspannungszwischenkreis gespeisten und eine Induktionsmaschine versorgenden Zweipunkt-Wechselrichters vorgeschlagen, bei dem in einem ersten Schritt die augenblicklichen Ständerphasenströme (ia(ν), ib(ν),ic(ν)), der Mittelwert der Zwischenkreisspannung ($\overline{U}$d(ν, ν-1)) und die augenblicklichen Spannungspolaritäten der Wechselrichter-Phasen erfaßt werden. In einem zweiten Schritt erfolgt eine Bestimmung der Wechselrichter-Ausgangsspannung unter Berücksichtigung der Dauer der Spannungspolaritäten. In einem dritten Schritt werden zur Ermittlung der realen Wechselrichter-Ausgangsspannung die Spannungsabfälle der Halbleiterventile des Wechselrichters berücksichtigt. In einem vierten Schritt erfolgt eine Raumzeiger-Transformation der realen Wechselrichter-Ausgangsspannungen zum Ständerspannungsraumzeiger ($\underline{u}$s(ν)).

Fig.1a

**Beschreibung**

Die Erfindung bezieht sich auf ein Verfahren zur Bestimmung der Ausgangsspannung eines Zweipunkt-Wechselrichters gemäß dem Oberbegriff des Anspruchs 1.

Die Erfindung kann sowohl bei mit GTOs (Gate Turn-Off Thyristoren) als auch bei mit IGBTs (Integrated-Gate-Bipolar-Transistoren) bestückten Zweipunkt-Wechselrichtern verwendet werden. Beim grundsätzlichen Verfahren ohne zusätzliche Störgrößenaufschaltung können alle bekannten Regelverfahren für die Bildung der Wechselrichter-Schaltbefehle verwendet werden, beispielsweise DSR (Direkte-Selbst-Regelung), DTC (Direct-Torque-Control) sowie mittelwertbasierende Verfahren mit PWM (Puls-Weiten-Modulation), wie indirekte Stromregelungen FOR (Feldorientierte Regelung bzw. rotorflußorientierte Zweikomponenten-Stromregelung oder indirekte Drehmoment-/Flußregelungen, wie ISR (Indirekte-Selbst-Regelung)). Die Verfahren mit zusätzlicher Störgrößenaufschaltung sind auf Regel- oder Steuerverfahren mit PWM beschränkt.

Aus F. Hoffmann, Drehgeberlos geregelte Induktionsmaschinen an IGBT-Pulsstromrichtern, Fortschrittsberichte VDI, Reihe 21, Nr. 213, S. 13 bis 22 ist es beispielsweise bekannt, ein Wechselrichtermodell zur Modellierung des Schaltverhaltens des an einem Gleichspannungszwischenkreis betriebenen Wechselrichters zu verwenden. Unter der Annahme idealer Halbleiterventile ergibt sich der vom Modell zu bestimmende Korrekturwert des Ständerspannungsraumzeigers unter anderem in Abhängigkeit des sogenannten Schaltwortes und der Zwischenkreisspannung. Aufgrund der nicht idealen Ventileigenschaften müssen bei der Ermittlung des Korrekturwertes des Ständerspannungsraumzeigers im Wechselrichtermodell jedoch zusätzlich die realen, die Ausgangsspannung des Wechselrichters verändernden Spannungsfälle im Wechselrichter sowie die aktuellen Einschaltverzugszeiten und Ausschaltverzugszeiten berücksichtigt werden, was im bekannten Fall durch Modellierung innerhalb des Wechselrichtermodells erfolgt.

Aus N. Mutoh, K. Nandoh und A. Ueda ,Automatic Torque Boost Control Method Suitable for PWM Inverter with a High Switching Frequency" in IEEE Transactions on Industrial Electronics, Vol. 39, No. 3, June 1992, Seite 250 bis 257 ist eine Drehmomentregelung für pulsweitenmodulierte Wechselrichter bekannt, bei der die Wechselrichter-Schaltbefehle in Abhängigkeit der dem Ausgang des Wechselrichters entnehmbaren Polaritäten der Phasenspannungen für die Induktionsmaschine korrigiert werden.

Die hier verwendete Korrekturmethode unter Messung der Polaritäten der Phasenspannungen am Ausgang des Wechselrichters setzt ein PWM-basiertes Regelverfahren voraus.

Der Erfindung liegt die Aufgabe zugrunde, ein Verfahren zur Bestimmung der Ausgangsspannung eines Zweipunkt-Wechselrichters der eingangs genannten Art anzugeben, mit dem der Ständerspannungsraumzeiger der an den Wechselrichter angeschlossenen Induktionsmaschine möglichst genau nachgebildet werden kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß einerseits der für eine direkte Spannungsmessung erforderliche spezielle Hardware-Aufwand für die Bestimmung der Ausgangsspannung des Wechselrichters stark reduziert wird. Andererseits entfällt auch der hohe Parametrisierungsaufwand für indirekte Verfahren zur Bestimmung der Ausgangsspannung des Wechselrichters (indirekte Spannungsmessung) sowie der Aufwand zur softwareseitigen Berücksichtigung der Einschaltverzugszeiten und Ausschaltverzugszeiten der Halbleiterschalter. Aufgrund der eingesetzten Polaritätsmessung der Wechselrichter-Ausgangsspannung entfällt eine aufwendige Bestimmung der zur indirekten Spannungsmessung notwendigen Polarität der Ständerphasenströme zum Schaltaugenblick. Die sich beim EIN- oder AUS-Schalten der Halbleiterventile einstellenden Verzögerungszeiten und insbesondere die durch Einschaltverzugszeiten und Ausschaltverzugszeiten der Halbleiterschalter bedingten Verzögerungen sind quasi automatisch durch die abgetasteten Polaritätssignale richtig berücksichtigt. Es kann ein besonders einfaches Wechselrichtermodell verwendet werden.

Bei Einsatz der zusätzlichen Störgrößenaufschaltung wird die Oberschwingungsbelastung, insbesondere die 6. Harmonische im Drehmoment und im Zwischenkreisstrom, reduziert.

Die Erfindung wird nachstehend anhand der in der Zeichnung dargestellten Ausführungsbeispiele erläutert. Es zeigen:

Fig. 1a, b      Grundanordnungen der Regeleinrichtung,

Fig. 2        eine Anordnung mit präziser Berücksichtigung der Zwischenkreisspannung,

Fig. 3        eine Anordnung mit zusätzlicher Störgrößenaufschaltung,

Fig. 4        eine Anordnung mit präziser Berücksichtigung der Zwischenkreisspannung und zusätzlicher Störgrößenaufschaltung,

| Fig. 5 | die Beziehungen zwischen den Schaltbefehlen und der Wechselrichter-Ausgangsspannung bei positivem Phasenstrom, |
|---|---|
| Fig. 6 | die Beziehungen zwischen den Schaltbefehlen und der Wechselrichter-Ausgangsspannung bei negativem Phasenstrom, |
| Fig. 7 | die Beziehung zwischen Wechselrichter-Ausgangsspannung und Spannungspolaritätssignal. |

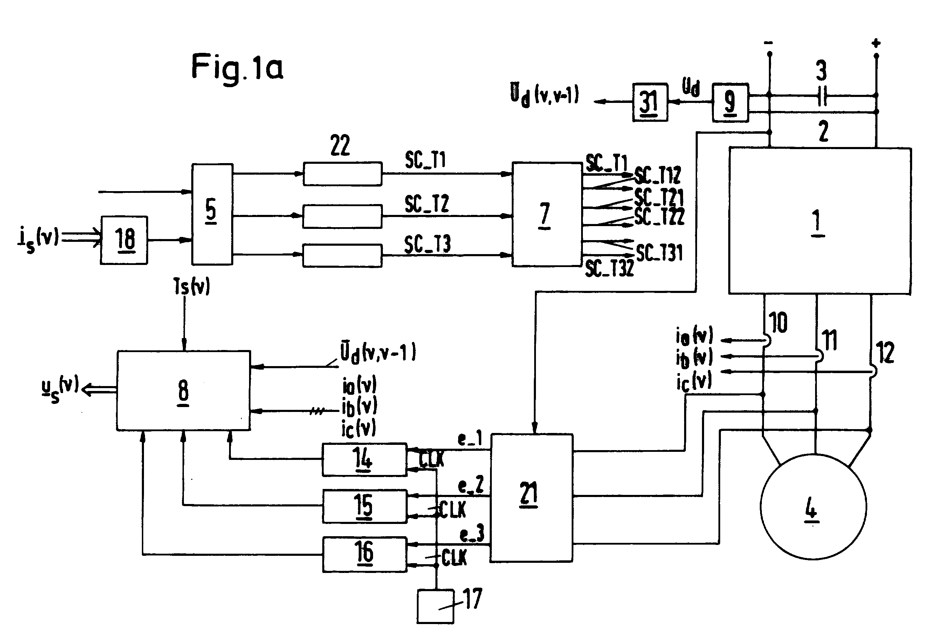

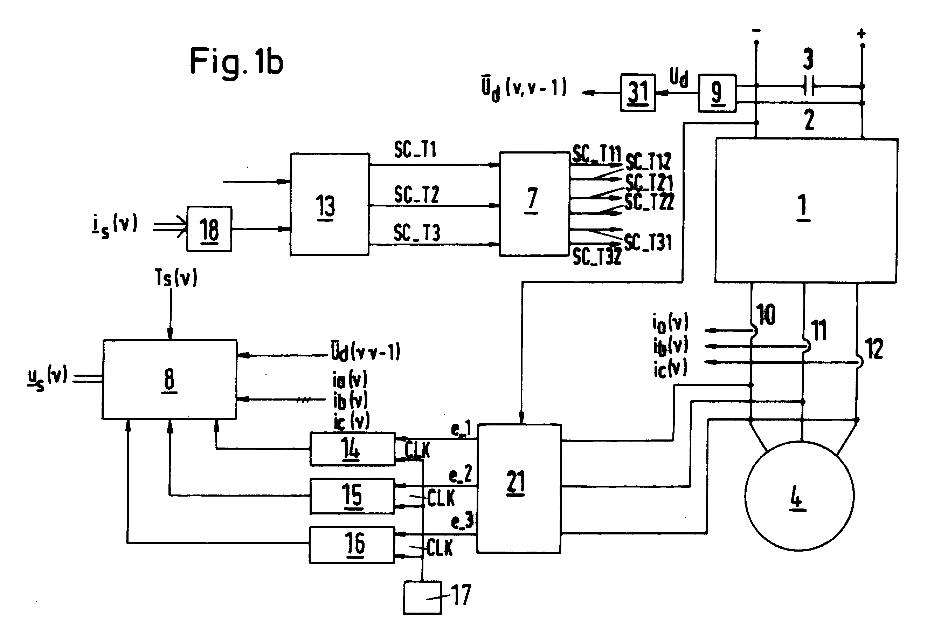

In den Fig. 1a, 1b sind Grundanordnungen der Regeleinrichtung für die Einstellung des gewünschten Drehmomentes und der gewünschten Drehzahl einer dreiphasigen Induktionsmaschine dargestellt. Es ist ein Wechselrichter 1 zu erkennen, der gleichspannungsseitig an einem Gleichspannungszwischenkreis 2 mit Zwischenkreiskondensator 3 liegt und drehspannungsseitig mit einer Induktionsmaschine 4 beschaltet ist. Als Halbleiterschalter können GTOs oder IGBTs verwendet werden.

Die Wechselrichter-Schaltbefehle SC_T11 bzw. SC_T12 für den oberen bzw. unteren Schalter der ersten Phase, SC_T21 bzw. SC_T22 für den oberen bzw. unteren Schalter der zweiten Phase und SC_T31 bzw. SC_T32 für den oberen bzw. unteren Schalter der dritten Phase werden mittels einer Schaltverriegelungslogik 7 aus den Wechselrichter-Schaltbefehlen SC_T1 bzw. SC_T2 bzw. SC_T3 (allgemein SC_Tx mit x=1, 2, 3) für die erste (x=1) bzw. zweite (x=2) bzw. dritte Phase (x=3) abgeleitet. Die Schaltbefehle SC_Tx können entweder von einem Pulsmustergenerator mit Zählervergleichseinheiten 22 ausgehend von einer mittelwertbasierenden Drehmoment/Flußregelung 5 erzeugt werden, wie in Fig. 1a dargestellt oder direkt von einem augenblickswertbasierenden Regelverfahren (beispielsweise DSR, DTC) vorgegeben werden, wie in Fig. 1 b mit Drehmoment/Fluß-Regelung 13 gezeigt.

In den Fig. 1a und 1b ist ein Wechselrichtermodell 8 zu erkennen, das eingangsseitig den Mittelwert der Zwischenkreisspannung $\bar{U}d(\nu, \nu - 1)$, die drei Ständerphasenströme $ia(\nu)$, $ib(\nu)$, $ic(\nu)$, die beispielsweise von einem Pulsweitenmodulator vorgegebene Abtastzeit $Ts(\nu)$ sowie nachstehend näher erläuterte Größen empfängt und ausgangsseitig den einem Flußbeobachter 18 zuzuleitenden Ständerspannungsraumzeiger $\underline{u}s(\nu)$ bildet. Der Mittelwert der Zwischenkreisspannung $\bar{U}d(\nu, \nu - 1)$ wird dabei unter Einsatz einer Spannungserfassungseinrichtung 9 mit nachgeschaltetem Mittelwertbildner 31 gebildet. Zur Erfassung der Ständerphasenströme $ia(\nu)$, $ib(\nu)$, $ic(\nu)$ sind Stromerfassungseinrichtungen 10, 11, 12 in den drei Phasen vorgesehen. Üblicherweise werden bei nicht angeschlossenem Sternpunkt der Induktionsmaschine nur zwei Phasenströme gemessen, der dritte Phasenstrom wird innerhalb der Signalverarbeitung (Hard- oder Software) aus der Stromsumme $ia+ib+ic=0$ nachgebildet. Mit $\nu$ ($\nu=1, 2, 3...$) werden die Abtastereignisse des zeitdiskret arbeitenden Wechselrichtermodells 8 und des Flußbeobachters 18 gekennzeichnet.

Im Falle der Ausführungsform gemäß Fig. 1a mit PWM sind die Abtastzeitpunkte $\nu$ mit der Pulsperiode Tp synchronisiert. Je nach Ausführungsform ist eine Überabtastung innerhalb einer Pulsperiode Tp (k-1, k) möglich, d.h. die Abtastfrequenz der Abtastzeitpunkte $\nu$ ist ein ganzzahliges Vielfaches der Pulsfrequenz und wird vom Pulsmustergenerator vorgegeben. Liegt keine Überabtastung vor, so gilt $\nu=k$.

Im Falle der Ausführungsform gemäß Fig. 1b sind die Abtastzeitpunkte $\nu$ äquidistant. Die Abtastzeit ist konstant und es gibt bedingt durch den Ansatz einer augenblickswertbasierenden Regelung (beispielsweise DSR oder DTC) keine feste Pulsperiode.

Eine Spannungspolarität-Erfassungseinrichtung 21 ist eingangsseitig an die drei Wechselrichter-Phasen und an den negativen Pol des Gleichspannungszwischenkreises 2 angeschlossen und bildet aus den abgegriffenen Spannungspolaritär-Informationen Enable-Signale $e\_1$, $e\_2$, $e\_3$ für drei Zähler/Ausgaberegister 14, 15, 16. Diese Enable-Signale (respektive die nachfolgend erwähnten Spannungspolaritätssignale VP1, VP2, VP3) weisen den logischen Wert „High" auf, wenn eine positive Spannung des Wechselrichterausgangs bezogen auf den negativen Pol des Zwischenkreises an der relevanten Phase ansteht und sie weisen den logischen Wert "Low" auf, wenn diese Spannung Null ist. Alternativ ist es selbstverständlich auch möglich, als Bezugspotential für die Polaritätserfassung die halbe Zwischenkreisspannung Ud/2 am Mittelpunkt des Zwischenkreiskondensators 3 heranzuziehen.

In Fig. 7 ist für diesen Zusammenhang beispielhaft die Beziehung zwischen Wechselrichter-Ausgangsspannung uphx und Spannungspolaritätssignal VPx (x=1 für erste Phase, x=2 für zweite Phase, x=3 für dritte Phase) dargestellt. Die Spannungspolaritäts-Erfassungseinrichtung 21 ist vorteilhaft auf den Gate-Drive-Units der unteren (mit dem negativen Pol des Zwischenkreises verbundenen) Halbleiterschalter (IGBTs oder GTOs) integriert, so daß sich kein zusätzlicher Aufwand hinsichtlich der Polaritätserfassung ergibt.

Den Eingängen der Zähler/Ausgaberegister 14, 15, 16 liegen Taktpulse CLK eines Oszillators 17 fester Frequenz an. Diese Taktimpulse werden während des Anstehens der Enable-Signale von den Zählern/Ausgaberegistern gezählt. Die Ausgänge dieser Zähler/Ausgaberegister 14, 15, 16 sind an das Wechselrichtermodell 8 angeschlossen.

Der Verfahrensablauf im einzelnen ist wie folgt:

In einem *ersten Schritt* erfolgt das Einlesen der Eingangsgrößen in das Wechselrichtermodell 8, wie der augenblicklichen Ständerphasenströme $ia(\nu)$, $ib(\nu)$, $ic(\nu)$, des Mittelwertes der Zwischenkreisspannung $\bar{U}d(\nu, \nu - 1)$ und

der augenblicklichen Zählerstände der Zähler/Ausgaberegister 14, 15, 16.

In einem *zweiten Schritt* erfolgt die Nachbildung der Wechselrichter-Ausgangsspannungen, insbesondere unter Berücksichtigung des Mittelwertes der Zwischenkreisspannung im betrachteten Intervall und der aktuell vorliegenden Zählerstände der Zähler/Ausgaberegister, d. h. der Dauer des ,,High"-Zustandes der Spannungspolaritäten.

In einem *dritten Schritt* werden die Spannungsabfälle der Halbleiterventile berücksichtigt. Der augenblickliche Spannungsabfall ist dabei entweder $U_{IGBT}$ bei leitendem IGBT oder $U_{DIODE}$ bei leitender Diode. Der durchschnittliche Spannungsabfall $\overline{U}_{phx\_vd}$ in einer Phase ist wie folgt zu ermitteln:

$$\overline{u}_{phx\_vd} = \begin{cases} -U_{DIODE} - z_{phx}(U_{IGBT} - U_{DIODE}) & \text{für} \quad i_{phx} > 0 \\ U_{IGBT} - z_{phx}(U_{IGBT} - U_{DIODE}) & \text{für} \quad i_{phx} < 0 \end{cases}$$

wobei zphx das augenblickliche Tastverhältnis der Wechselrichterphase x bezogen auf die Abtastzeit darstellt.

In einem *vierten Schritt* erfolgt die Raumzeiger-Transformation der Wechselrichter-Ausgangsspannungen zum Ständerspannungsraumzeiger $\underline{u}_s(v)$.

Neben der vorstehend erläuterten Grundform des erfindungsgemäßen Verfahrens sind mehrere Varianten möglich, die nachstehend an Hand der eingesetzten Regeleinrichtungen beschrieben werden.

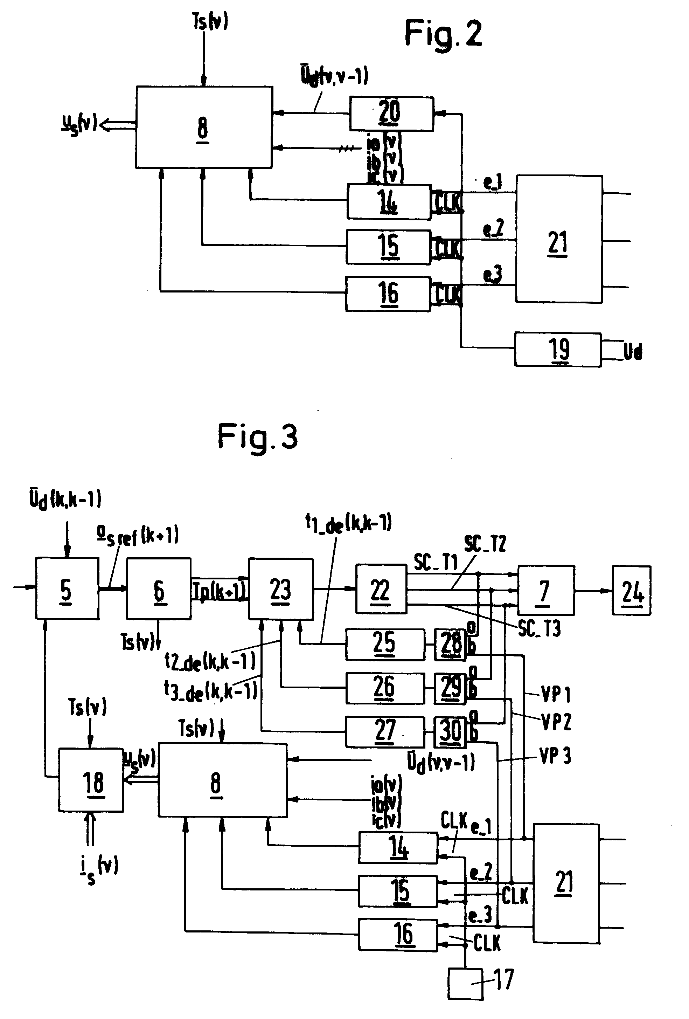

In Fig. 2 ist eine Anordnung mit präziser kontinuierlicher Berücksichtigung der Zwischenkreisspannung dargestellt. Bei dieser Anordnung entfällt im Vergleich zur Einrichtung gemäß den Fig. 1a und 1b der Mittelwertbildner 31. Die von der Spannungserfassungseinrichtung 9 ermittelte Zwischenkreisspannung Ud wird vielmehr einem spannungsgesteuerten Oszillator 19 zugeleitet, der die Frequenz der Taktpulse CLK in Abhängigkeit der Zwischenkreisspannung einstellt und den Zähler/Ausgaberegistern 14, 15, 16 sowie einem Zähler/Ausgaberegister 20 zuführt. Das Zähler/Ausgaberegister 20 leitet den gebildeten Mittelwert $\overline{U}d(v, v - 1)$ dem Wechselrichtermodell 8 zu. Die übrige Anordnung ist wie unter Fig. 1 beschrieben.

Da bei diesem Verfahren mit einem spannungsgesteuerten Oszillator (VCO) ein mittelwertbildendes Meßverfahren benutzt wird, werden vorteilhaft Änderungen der Zwischenkreisspannung Ud kontinuierlich berücksichtigt (mittelwertbildende Hardware).

In Fig. 3 ist als weitere Variante eine Anordnung mit zusätzlicher Störgrößenaufschaltung dargestellt. Zusätzlich zur Anordnung gemäß Fig. 1a ist eine Störgrößenaufschaltung 23 vorgesehen, welche eingangsseitig außer den Phasen-Schaltzeiten gemessene Fehlerverzögerungszeiten t1de(k, k-1), t2de(k, k-1), t3de(k,k-1) - allgemein txde(k, k-1) - empfängt und ausgangsseitig korrigierte Phasen-Schaltzeiten an die Zählervergleichseinheit 22 abgibt. Ziel ist es dabei, die Wechselrichter-Schaltbefehle entsprechend den spannungsabhängigen und/oder stromabhängigen Kommutierungsverzugszeiten derart zu verschieben, daß symmetrische Pulsmuster entstehen. Der Zählervergleichseinheit 22 nachgeschaltet ist die Schaltverriegelungslogik 7 und die Halbleiteransteuerung 24 (Gate Drive Units).

Die Fehlerverzögerungszeiten t1de(k, k-1), t2de(k, k-1), t3de(k, k-1) - allgemein txde(k, k-1) - werden unter Einsatz von Zähler/Ausgaberegistern 25, 26, 27 gebildet, denen jeweils XOR-Gatter 28, 29, 30 (Exklusiv-ODER-Glieder) vorgeschaltet sind. An den Eingängen a dieser XOR-Gatter 28 bzw. 29 bzw. 30 liegen die Wechselrichter-Schaltbefehle SC_T1 bzw. SC_T2 bzw. SC_T3 an. Die Eingänge b dieser XOR-Gatter 28 bzw. 29 bzw. 30 sind mit den Spannungspolaritätssignalen VP1 bzw. VP2 bzw. VP3 der Spannungspolarität-Erfassungseinrichtung 21 beschaltet, welche gleichzeitig als Enable-Signale e_1, e_2, e_3 an den Zähler/Ausgaberegistern 14, 15, 16 anstehen.

Wie in Fig. 3 zu erkennen ist, empfängt die Störgrößenaufschaltung 23 die Pulsperiode Tp(k+1) sowie die Phasen-Schaltzeiten von einem Pulsweitenmodulator 6, dem eingangsseitig der von einer Drehmoment/Fluß-Regelung 5 gebildete Aussteuerungs-Raumzeiger $\underline{a}sref(k+1)$ anliegt. Der Drehmoment/Fluß-Regelung 5 wird ferner der Mittelwert der Zwischenkreisspannung $\overline{U}d(k,k - 1)$ zugeleitet.

Wie des weiteren in Fig. 3 zu erkennen ist, leitet das Wechselrichtermodell 8 den gebildeten Ständerspannungsraumzeiger $\underline{u}_s(v)$ einem Flußbeobachter 18 zu, dem als weitere Eingangsgrößen der Ständerstromraumzeiger $\underline{i}_s(v)$ und die Abtastzeit Ts(v) anliegen. Die Abtastzeit Ts(v) wird vom Pulsweitenmodulator 6 vorgegeben und dient auch als eingangsseitige Größe des Wechselrichtermodells 8. Die übrige Anordnung ist wie unter Fig. 1a beschrieben.

Als Eingangsgrößen werden der Drehmoment/Fluß-Regelung 5 beispielsweise der Drehmoment-Sollwert und der Fluß-Sollwert zugeleitet. Für die Drehmoment/Fluß-Regelung 5 können eine Vielzahl von allgemein bekannten Regelungen eingesetzt werden. Wird für die Drehmoment/Fluß-Regelung 5 beispielsweise eine rotorflußorientierte Regelung eingesetzt, werden vom Flußbeobachter 18 der Istwert des Rotorflußbetrages, die rotorflußorientierten Stromkomponenten und der Transformationswinkel zwischen Rotorfluß und Statorkoordinatensystem gebildet und der Drehmoment/Fluß-Regelung 5 zugeleitet. Wird für die Drehmoment/Fluß-Regelung 5 beispielsweise eine ISR-Regelung (Indirekte Selbst-Regelung) eingesetzt, werden vom Flußbeobachter 18 der Drehmoment-Istwert, der Betrag des Statorfluß-Istwertes, der Istwert des Statorfluß-Raumzeigers und die Stromistwerte gebildet und der Drehmoment/Fluß-Regelung 5 zugeleitet.

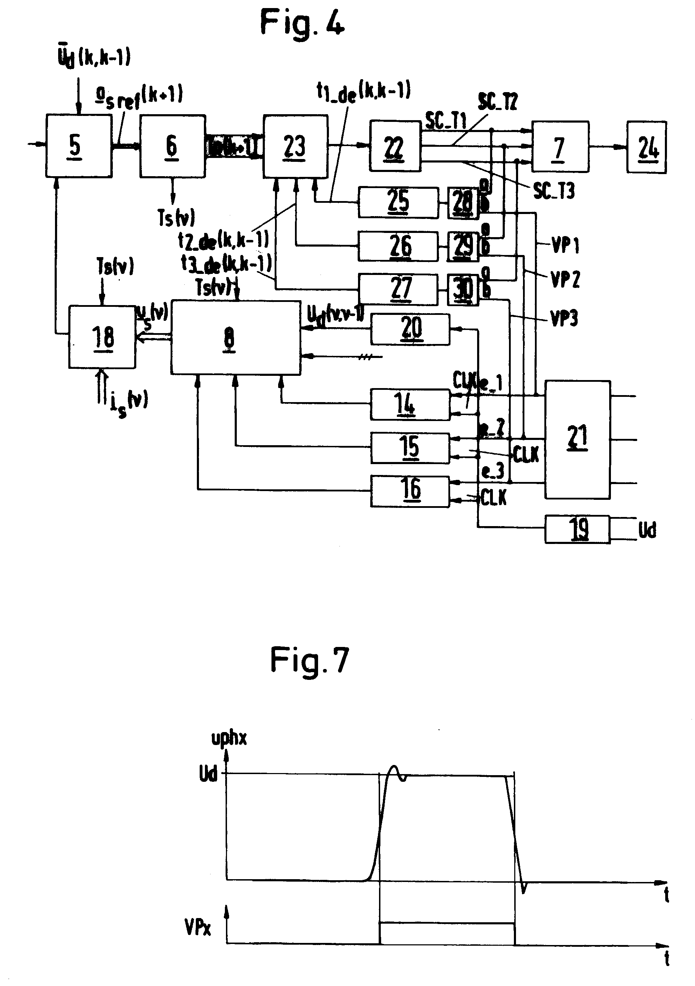

In Fig. 4 ist eine Anordnung mit präziser Berücksichtigung der Zwischenkreisspannung und zusätzlicher Störgrößenaufschaltung dargestellt. Diese Anordnung entspricht in wesentlichen Teilen der Anordnung gemäß Fig. 3, wobei jedoch der Mittelwertbildner 31 (siehe Fig. 1) entfällt und die von der Spannungserfassungseinrichtung 9 ermittelte Zwischenkreisspannung Ud dem spannungsgesteuerten Oszillator 19 zugeleitet wird, der die Frequenz der Taktpulse CLK in Abhängigkeit der Zwischenkreisspannung einstellt, wie dies bereits unter Fig. 2 beschrieben ist. Die Funktionsweisen der unter den Fig. 2 und 3 erläuterten Einrichtungen addieren sich bei dieser Ausgestaltung.

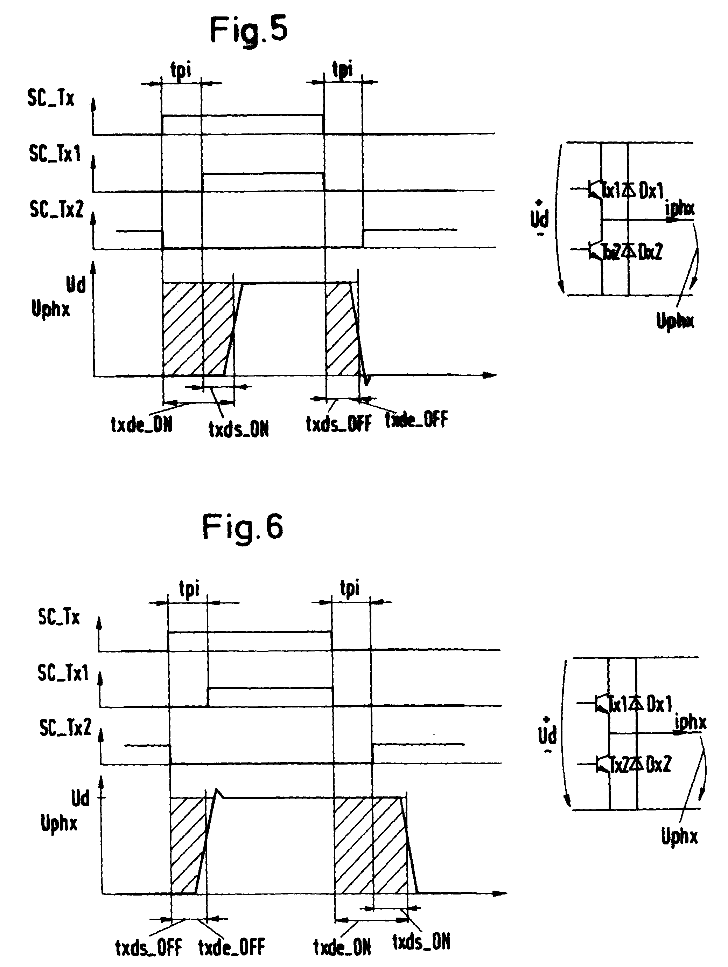

In den Fig. 5 und 6 sind die Beziehungen zwischen den Schaltbefehlen und der Wechselrichter-Ausgangsspannung bei positivem Phasenstrom dargestellt. Im rechten Abschnitt der Figur 5 ist dabei eine Wechselrichterphase gezeigt, mit dem am positiven Pol des Gleichspannungszwischenkreises liegenden oberen Schalter Tx1, der hierzu parallelen Diode Dx1, mit dem am negativen Pol des Gleichspannungszwischenkreises liegenden unteren Schalter Tx2, der hierzu parallelen Diode Dx2, der Zwischenkreisspannung Ud, dem Wechselrichter-Phasenstrom iphx und der Wechselrichter-Ausgangsspannung uphx.

Im linken Abschnitt der Fig. 5 sind untereinander die zeitlichen Verläufe der Wechselrichter-Schaltbefehle SC_Tx für die Phase x, der Wechselrichter-Schaltbefehle SC_Tx1 für den oberen Schalter der Phase x, der Wechselrichter-Schaltbefehle SC_Tx2 für den unteren Schalter der Phase x und der Wechselrichter-Ausgangsspannung uphx dargestellt. Die zu Beginn und am Ende eines Wechsel des Schaltzustandes einzuhaltenden Wechselsperrzeiten tpi sind jeweils gezeigt. Es ergibt sich somit, daß die Anstiegsflanke von SC_Tx1 um tpi gegenüber der Anstiegsflanke von SC_Tx verzögert ist und daß die Anstiegsflanke von SC_Tx2 um tpi gegenüber der Abfallflanke von SC_Tx verzögert ist.

Wie aus dem zeitlichen Verlauf von uphx in Fig. 5 erkennbar ist, ergibt sich eine weitere Verzögerung der Anstiegsflanke der Wechselrichter-Ausgangsspannung uphx um die Einschaltverzugszeit txds_ON, so daß die Anstiegsflanke von uphx insgesamt um die Fehler-Verzögerungszeit txde_ON = tpi + txds_ON gegenüber der Anstiegsflanke von SC_Tx verzögert ist. Die sich bei der Abfallflanke von uphx gegenüber der Abfallflanke von SC_Tx einstellende Fehler-Verzögerungszeit txde_OFF entspricht der Ausschaltverzugszeit txds_OFF. Die sich beim Ein- und Ausschalten ergebenden Fehler-Spannungszeitflächen sind schraffiert gekennzeichnet.

Die in den Fig. 3 und 4 bezeichneten Fehlerverzögerungszeiten txde entsprechen den Fehlerverzögerungszeiten txde_ON und txde_OFF. Vorteilhaft werden durch die Störgrößenaufschaltung die Wechselrichter-Schaltbefehle derart verschoben, daß die Spannungszeitfläche der tatsächlichen Wechselrichter-Ausgangsspannung der Sollspannung entspricht und keine Phasenverschiebung aufweist.

In Fig. 6 sind die Beziehungen zwischen den Schaltbefehlen und der Wechselrichter-Ausgangsspannung bei negativem Phasenstrom dargestellt.

Im linken Abschnitt der Fig. 6 sind untereinander wiederum die zeitlichen Verläufe der Wechselrichter-Schaltbefehle SC_Tx für die Phase x, der Wechselrichter-Schaltbefehle SC_Tx1 für den oberen Schalter der Phase x, der Wechselrichter-Schaltbefehle SC_Tx2 für den unteren Schalter der Phase x und der Wechselrichter-Ausgangsspannung uphx dargestellt. Die zu Beginn und am Ende eines Wechsel des Schaltzustandes zu beachtenden Wechselsperrzeiten tpi sind jeweils gezeigt. Es ergibt sich somit wiederum, daß die Anstiegsflanke von SC_Tx1 um tpi gegenüber der Anstiegsflanke von SC_Tx verzögert ist und daß die Anstiegsflanke von SC_Tx2 um tpi gegenüber der Abfallflanke von SC_Tx verzögert ist.

Die sich bei der Anstiegsflanke von uphx gegenüber der Anstiegsflanke von SC_Tx einstellende Fehler-Verzögerungszeit txde_OFF entspricht der Ausschaltverzugszeit txds_OFF. Wie aus dem zeitlichen Verlauf von uphx in Fig. 6 erkennbar ist, ergibt sich eine weitere Verzögerung der Abfallflanke um die Einschaltverzugszeit txds_ON, so daß die Abfallflanke von uphx insgesamt um die Fehler-Verzögerungszeit txde_ON = tpi + txds_ON gegenüber der Abfallflanke von SC_Tx verzögert ist. Die sich beim Ein- und Ausschalten ergebenden Fehler-Spannungszeitflächen sind wiederum schraffiert gekennzeichnet.

**Patentansprüche**

1.   Verfahren zur Bestimmung der Ausgangsspannung eines über einen Gleichspannungszwischenkreis gespeisten und eine Induktionsmaschine versorgenden Zweipunkt-Wechselrichters, dadurch gekennzeichnet, daß

- in einem ersten Schritt die augenblicklichen Ständerphasenströme (ia($\nu$), ib($\nu$),ic($\nu$)), der Mittelwert der Zwischenkreisspannung ($\overline{U}$d($\nu$, $\nu$ - 1) ) und die augenblicklichen Spannungspolaritäten der Wechselrichter-Phasen erfaßt werden,
- in einem zweiten Schritt eine Bestimmung der Wechselrichter-Ausgangsspannung unter Berücksichtigung der Dauer der Spannungspolaritäten erfolgt,
- in einem dritten Schritt zur Ermittlung der realen Wechselrichter-Ausgangsspannung die Spannungsabfälle der Halbleiterventile des Wechselrichters berücksichtigt werden,

- in einem vierten Schritt eine Raumzeiger-Transformation der realen Wechselrichter-Ausgangsspannungen zum Ständerspannungsraumzeiger ($\underline{u}$s($\nu$)) erfolgt.

2. Verfahren nach Anspruch 1, dadurch gekennzeichnet, daß die Bildung des Mittelwertes der Zwischenkreisspannung ($\overline{U}$d($\nu$, $\nu$ - 1) ) mittels eines Mittelwertbildners (31) erfolgt.

3. Verfahren nach Anspruch 1, dadurch gekennzeichnet, daß die Bildung des Mittelwertes der Zwischenkreisspannung ($\overline{U}$d($\nu$, $\nu$ - 1) ) mittels eines spannungsgesteuerten Oszillators (19) mit nachgeschaltetem Zähler/Ausgaberegister (20) erfolgt, wobei die Frequenz des Oszillators in Abhängigkeit der Zwischenkreisspannung eingestellt wird.

4. Verfahren nach einem der Ansprüche 1 bis 3, dadurch gekennzeichnet, daß eine zusätzliche Störgrößenaufschaltung (23) vorgesehen ist, welche die Wechselrichter-Schaltbefehle (SC_Tx mit x=1, 2, 3) entsprechend den auftretenden Fehlerverzögerungszeiten (t1de, t2de, t3de) der Wechelrichter-Ausgangsspannung derart verschiebt, daß symmetrische Pulsmuster entstehen.

5. Verfahren nach Anspruch 4, dadurch gekennzeichnet, daß die auftretenden Fehlerverzögerungszeiten (t1de, t2de, t3de) der Wechelrichter-Ausgangsspannung durch Vergleich der augenblicklichen Dauer der Wechselrichter-Schaltbefehle (SC_Tx mit x=1, 2, 3) mit der Dauer der Spannungspolaritäten gebildet werden.

Fig.1a

Fig.1b

Fig.2

Fig.3

# Fig. 4

$\bar{u}_d(k,k-1)$

$g_{s\,ref}(k+1)$

$t1\_de(k,k-1)$

SC_T1    SC_T2

| 5 | | 6 | | 23 | | 22 | | 7 | | 24 |

$T\underline{\underline{g}}(k,k-1)$

Ts(v)

SC_T3

t2_de(k,k-1)

| 25 | | 28 | a/b

t3_de(k,k-1)

| 26 | | 29 | a/b    VP1

Ts(v)

Ts(v)

| 27 | | 30 | a/b    VP2

| 18 | $u_s(v)$ | 8 | $U_d(v,v-1)$ | 20 |    VP3

$i_s(v)$

CLK e_1

| 14 |

e_2

| 15 |    CLK    | 21 |

e_3

| 16 |    CLK

| 19 |    Ud

# Fig. 7

uphx

Ud

t

VPx

t

# Fig.5

# Fig.6